# FASCICULE DE BREVET EUROPEEN

(11) **EP 1 520 214 B1**
(45) Date de publication et mention de la délivrance du brevet: **17.11.2010**
(21) Numéro de dépôt: 03762695.9
(22) Date de dépôt: 09.07.2003
(51) Int. Cl.: G04B 1/00, G04B 19/04

(54) **MOUVEMENT HORLOGER POUR MONTRE BRACELET**
UHRWERK FÜR ARMBANDUHR
CLOCK MOVEMENT FOR WRISTWATCH

(30) Priorité: 09.07.2002 CH 118802
(43) Date de publication de la demande: 06.04.2005
(60) Demande divisionnaire: 10180522.4
(73) Titulaire: LVMH Swiss Manufactures SA, 2300 La Chaux-de-Fonds (CH)
(72) Inventeur: RUCHONNET, Jean-François, CH-1271 Givins (CH)
(74) Mandataire: P&TS Patents & Technology Surveys SA
(86) Numéro de dépôt international: PCT/EP2003/050301
(87) Numéro de publication internationale: WO 2004/006026

(56) Documents cités:
- CH-A- 337 789
- DE-C- 499 642
- DE-U- 20 206 965
- GB-A- 281 385

## Description

La présente invention concerne un mouvement horloger pour montre bracelet, en particulier un dispositif d'entraînement pour mouvement de montre.

La montre bracelet à mouvement mécanique est devenue un objet de luxe et par conséquent sujette à de nombreuses modifications du fait de l'effet de mode. Le boîtier a été l'élément de départ avec ses formes personnalisées, puis le bracelet avec ses formes et matières différentes et ses dispositifs de fermeture. Est venu ensuite l'intérieur de la montre et son mécanisme. De plus en plus ce mouvement a fait l'objet de complications mécaniques montrant ainsi l'ingéniosité des différents systèmes et le savoir-faire du maître d'oeuvre. Il est bien évident que c'est là que les possibilités sont les plus nombreuses et rien ne peut arrêter l'imagination du créateur.

Les montres mécaniques usuelles comportent un accumulateur d'énergie constitué par un barillet, un organe de comptage, ou rouage, un organe de régulation, ou distribution, comportant un échappement et un balancier-spiral qui déterminent la marche de la montre, ainsi qu'un affichage assuré en général par des aiguilles sur un cadran. La présente invention concerne plus particulièrement la chaîne cinématique de transmission de l'énergie et des mouvements entre ces différents organes. Dans les mouvements mécaniques conventionnels, ainsi que dans les mouvements à quartz, les couples et les mouvements sont transmis entre les différents éléments mobiles d'une montre au moyen d'engrenages. Ainsi, le ressort de barillet, en se désarmant, entraîne le tambour de barillet en rotation, puis d'engrenage en engrenage jusqu'au pignon d'échappement et jusqu'aux aiguilles. Les engrenages sont constitués par des roues dentées ou par des crémaillères engrenées directement les uns aux autres.

Les engrenages sont un moyen de transmission d'énergie efficace et dont la fiabilité est éprouvée. Au cours de la réflexion ayant mené à l'invention, il a toutefois été constaté qu'ils imposent un certain nombre de contraintes aux constructeurs de mouvements. Ainsi, les axes des deux roues d'un engrenage doivent être parallèles ou éventuellement perpendiculaires; des axes d'orientation quelconques sont uniquement possibles avec des engrenages coniques coûteux, difficiles à fabriquer et de plus faible rendement. Pour cette raison, les mouvements de montre sont presque toujours construits autour d'une platine et de ponts parallèles entre eux. Ainsi, les mouvements de montre comportent presque toujours deux faces principales planes et parallèles entre elles, toute autre géométrie imposant des contraintes difficiles à surmonter pour la réalisation du train d'engrenage.

Dans le cas de montres de grand diamètre, un mouvement plat n'est pas toujours optimal; une forme incurvée, par exemple une forme concave adaptée au poignet ou une forme convexe permettant à la peau de respirer est souvent désirable. Il serait aussi souhaitable de pouvoir afficher des aiguilles ou d'autres indicateurs non parallèles au cadran, par exemple sur les faces latérales de la montre ou dans un plan oblique. Ces réalisations sont toutefois difficiles à réaliser avec des engrenages cylindriques dont les axes sont parallèles.

Les engrenages transmettent l'énergie de manière efficace uniquement lorsque les deux roues engrenées sont parfaitement alignées et espacées correctement. Dans une montre, il est donc nécessaire de fixer les axes de roues et des pignons avec une très grande précision, ce qui renchérit le coût de fabrication. Des déplacements minimes provoqués par un choc ou une accélération peuvent bloquer l'engrenage; il est donc nécessaire d'utiliser des axes rigides et fixés à la platine et aux ponts à l'aide de moyens antichocs, par exemple de pierres et de paliers incablocs^{™}. Ces éléments sont coûteux, fragiles et difficiles à assembler. Par ailleurs, les dents des composants de l'engrenage doivent impérativement être fabriquées en métal dur afin de limiter leur usure et de garantir un contact optimal même après plusieurs années de fonctionnement.

Les engrenages ont par ailleurs l'inconvénient de nécessiter une lubrification qui doit être répétée périodiquement.

Les engrenages sont aussi peu appropriés à l'entraînement de roues ou de mobiles éloignés les uns des autres dans un mouvement, dans un tel cas, une chaîne d'engrenages intermédiaire doit être utilisée, qui renchérit le coût du mouvement, réduit sa fiabilité et nécessite des axes supplémentaires. Une autre solution chère et encombrante est d'augmenter le diamètre des deux roues de l'engrenage.

Enfin, les deux roues d'un engrenage tournent nécessairement en sens opposé; lorsqu'il est nécessaire de les faire tourner dans le même sens, une roue ou un pignon intermédiaire doit être utilisé qui renchérit le mouvemement et nécessite une place supplémentaire dans l'espace réduit du mouvement. Par exemple, la roue des minutes ne peut pas engrener directement avec la roue des heures ni avec celles des secondes, puisque les trois aiguilles correspondantes doivent tourner dans le même sens.

Un but de la présente invention est donc de proposer un mouvement de montre qui évite ces inconvénients.

Un autre but est d'utiliser de moyens alternatifs dans la chaîne cinématique d'un mouvement de montre, provoquant un effet de surprise par le choix d'une technologie inhabituelle.

Un autre but est de proposer un mouvement de montre de conception alternative et nouvelle qui autorise des constructions et de designs différents des mouvements conventionnels.

Selon l'invention, ces buts sont atteints au moyen d'un mouvement de montre qui présente les caractéristiques de la revendication 1, des modes de réalisation préférentiels étant par ailleurs indiqués dans la description. L'invention concerne aussi un procédé de montage d'un tel mouvement de montre selon la revendication 42.

En particulier, ces buts sont atteints grâce à un mouvement horloger destiné à être intégré dans un boîte de montre-bracelet et comportant au moins une courroie pour transmettre les mouvements et/ou les couples entre au moins deux poulies (c'est-à-dire entre une poulie entraînante et au moins une poulie entraînée).

En remplaçant un ou plusieurs engrenages par un ensemble formé de deux poulies et d'une courroie, on obtient tout d'abord un effet de surprise, particulièrement si les courroies sont visibles au travers du fond de la montre ou au travers du cadran. Par ailleurs, les différentes poulies connectées par une même courroie peuvent être orientées dans des plans différents, ce qui donne une liberté supplémentaire au constructeur de mouvement lors de la conception d'un nouveau mouvement.

Les autres problèmes des engrenages évoqués plus haut sont aussi résolus.

Le terme de courroie doit être interprété de manière large dans ladite demande pour inclure des courroies lisses ou crantées, des chaînes, des bandes et des câbles de transmission entre poulies. Toutefois, dans une variante préférentielle, la courroie utilisée est une courroie au moins partiellement en matériau synthétique et munie de crans (dents).

Le document CH61963 décrit un mouvement horloger comportant une chaîne cinématique incorporant une chaîne entre deux poulies. Le mouvement décrit est destiné à une pendule et ne pourrait pas sans grandes difficultés être intégré à une montre bracelet, où il n'apporterait pas les avantages recherchés dans ce document.

L'Encyclopédie de Diderot et d'Alembert, Horlogerie, Planche X, 4ème et 5ème suite et description, pages 16 à 18, décrit un mouvement horloger dont le barillet actionne une chaîne. La chaîne est successivement enroulée sur une fusée dont le diamètre variable permet de compenser partiellement les variations de couple du ressort, L'usage d'une courroie n'est en revanche pas décrit, Ce mécanisme n'est pas destiné à une montre bracelet.

EP509965 et EP677796 décrivent tous deux des montres comportant une aiguille montée sur une courroie. La courroie permet de déplacer les aiguilles selon une trajectoire linéaire. La direction des aiguilles ne varie pas, sauf aux deux extrémités de la trajectoire constante. Cette solution n'est pas adaptée à des aiguilles pivotant autour d'un axe.

Des pendules murales ou de table munies de chaînes et de courroies sont aussi décrites dans US1667685, US2494011, US4320480, US5105398, US4022015 et dans US4676662. Tous ces documents concernent cependant des horloges et pendules de grandes dimensions, dont le mouvement ne peut en aucun cas être miniaturisé pour être logé dans une montre bracelet.

FR391702 décrit une montre bracelet qui indique l'heure au moyen d'une bande perforée qui fait tout le tour du poignet en étant entraînée par deux roues. L'heure peut être lue en vérifiant la position d'un indicateur sur la bande autour du poignet. La lecture est particulièrement malcommode lorsque l'indicateur mobile se trouve sur la face latérale externe du poignet, difficile à regarder. Cette solution n'est adaptée qu'à un type de montre extrêmement particulier et qui ne satisfait certainement pas l'ensemble des besoins et des goûts des utilisateurs; le mouvement décrit ne peut absolument pas être intégré dans une boîte de montre plus conventionnelle. Par ailleurs, la bande utilisée constitue un indicateur pour remplacer les aiguilles, mais n'est pas destinée à transmettre des mouvements ni des couples dans une chaîne cinématique entre deux poulies. Les deux roues en contact avec cette bande sont en effet toutes deux entraînantes.

L'invention sera mieux comprise à la lecture d'un exemple annexé illustré par les figures qui montrent:
La figure 1 une vue de dessus d'une montre bracelet incluant un mouvement horloger selon l'invention.
La figure 2 une vue en perspective de trois quarts d'un mouvement horloger selon l'invention.
La figure 3 un éclaté partiel du mouvement horloger de l'invention.
La figure 4 une vue de dessus du mouvement de l'invention, vu à travers la platine.
La figure 5 un détail d'une courroie.
La figure 6 une coupe longitudinale de la masse oscillante linéaire du mouvement horloger de l'invention.
La figure 7 une coupe transversale de la masse oscillante linéaire du mouvement horloger de l'invention.

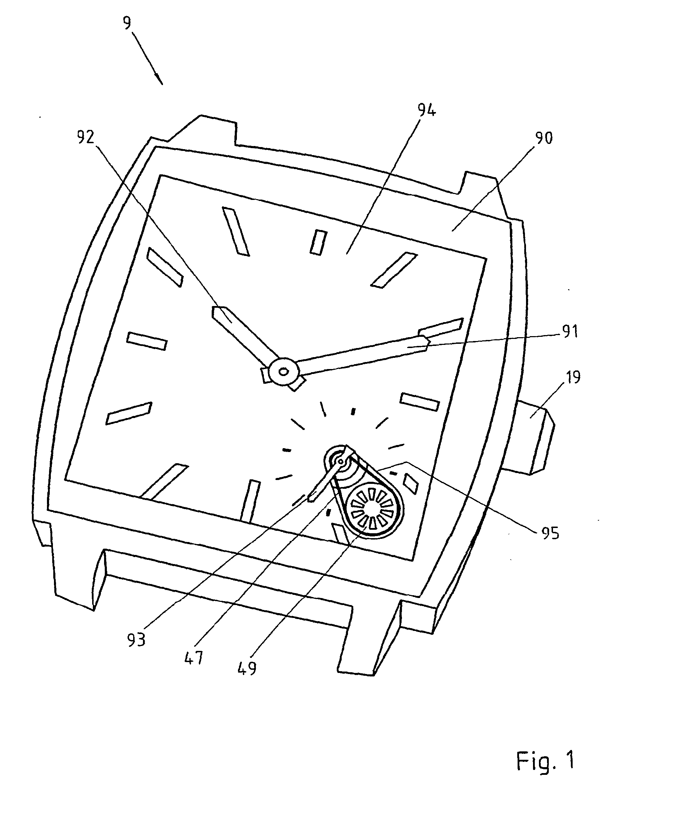

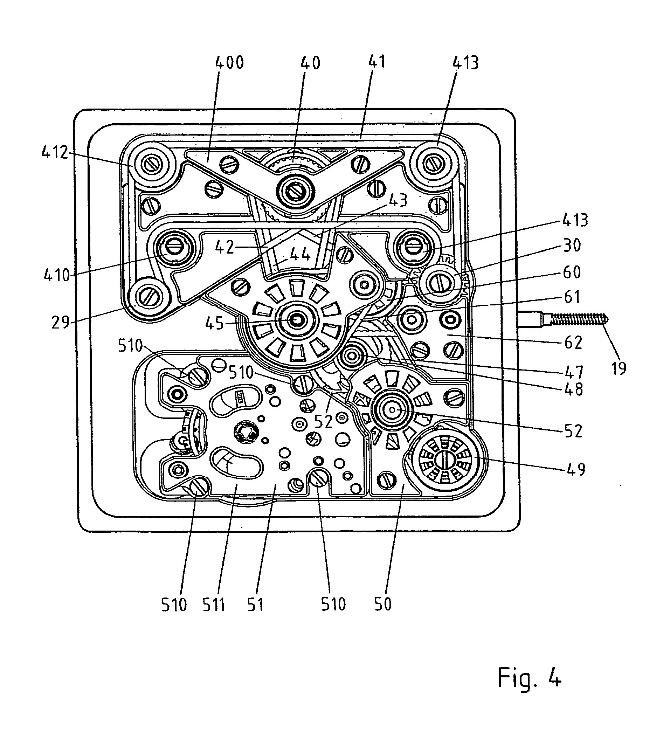

Une montre 9 équipée d'un mouvement horloger selon l'invention est illustrée à titre d'exemple sur la figure 1. La montre comporte une boîte 90 permettant d'emboîter le mouvement par le fond, comme on le verra. Une couronne de remontoir et de mise à l'heure 19, liée à un module de remontage et de mise à l'heure amovible 62 (figure 4) permet de remonter et/ou de mettre la montre à l'heure. Des aiguilles de minute 91 et d'heure 92, ainsi qu'une aiguille de petite seconde 93 à 16h30 se déplacent au-dessus d'un cadran 94 afin d'afficher l'heure. Le cadran comporte au moins une ouverture 95 permettant d'apercevoir au moins une partie du mouvement, de préférence une partie du mouvement comportant une courroie ou un tronçon significatif de courroie, comme on le verra plus loin.

Dans une autre variante non illustrée, la montre est de type squelette, c'est-à-dire dépourvue de cadran, et les aiguilles se déplacent directement au-dessus du mouvement. Dans encore une autre variante non illustrée, le cadran est constitué d'un verre ou d'un matériau synthétique opaque pour un observateur qui le regarde en face, et transparent lorsqu'on l'incline par rapport à la direction du regard. Cette variante, qui peut du reste être utilisée en combinaison avec n'importe quel mouvement de montre, permet de distinguer facilement les aiguilles au-dessus du cadran lorsque celui-ci est incliné en position de lecture, et de vérifier le fonctionnement du mouvement simplement en orientant la montre dans une direction préférentielle. Dans une autre variante, le cadran pourrait être constitué d'une cellule de cristaux liquides opaque au repos et transparents lorsqu'une tension entre les deux faces oriente les cristaux différemment.

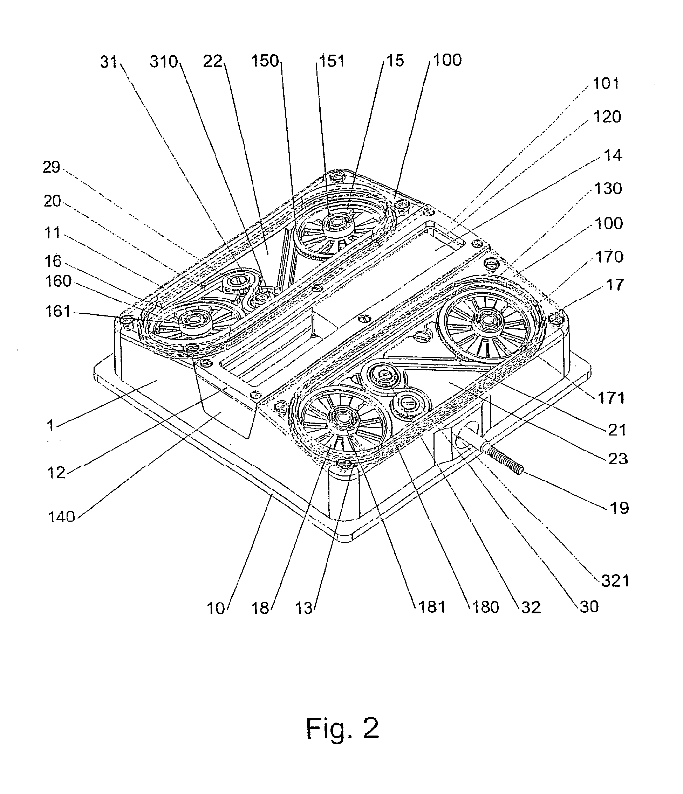

Un exemple de mouvement selon l'invention est illustré sur les figures 2 à 4. Le mouvement est construit autour d'un châssis 1 muni d'une platine 10 et d'un fond 11, 12, 13 comportant deux faces obliques 100, inclinées, dans cet exemple d'environ 13° par rapport à la platine. La portion centrale 12 entre les deux faces inclinées 11 et 13 est parallèle à la platine 100 et au cadran 94. Cette forme convexe du fond permet de réduire la surface d'appui entre le fond de la montre et le poignet, et de réduire les problèmes de transpiration.

Selon une caractéristique indépendante de l'invention, le fond du mouvement constitue directement le fond de la montre; la portion centrale plane 12 du fond du mouvement est donc directement en contact avec le poignet du porteur. Le fond 11, 12, 13 du mouvement est de préférence étanchéifié à l'aide de joints non référencés afin d'empêcher les infiltrations d'humidité dans le mouvement.

Afin de contrôler le fonctionnement du mouvement, les faces 11, 12, 13 sont fermées par des glaces 110, 120, 130 respectivement. Dans l'exemple, chaque glace est tenue par un cadre (non référencé) vissé individuellement sur le châssis 1.

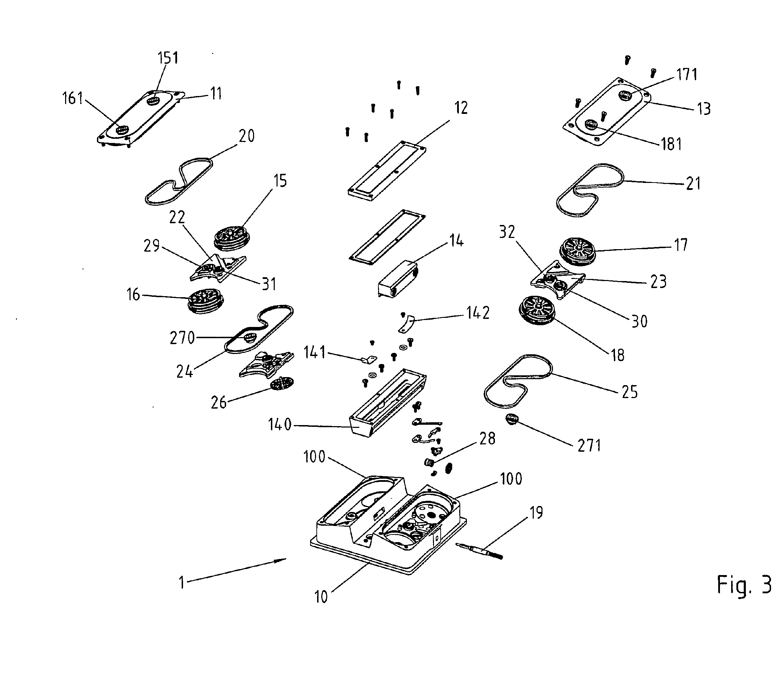

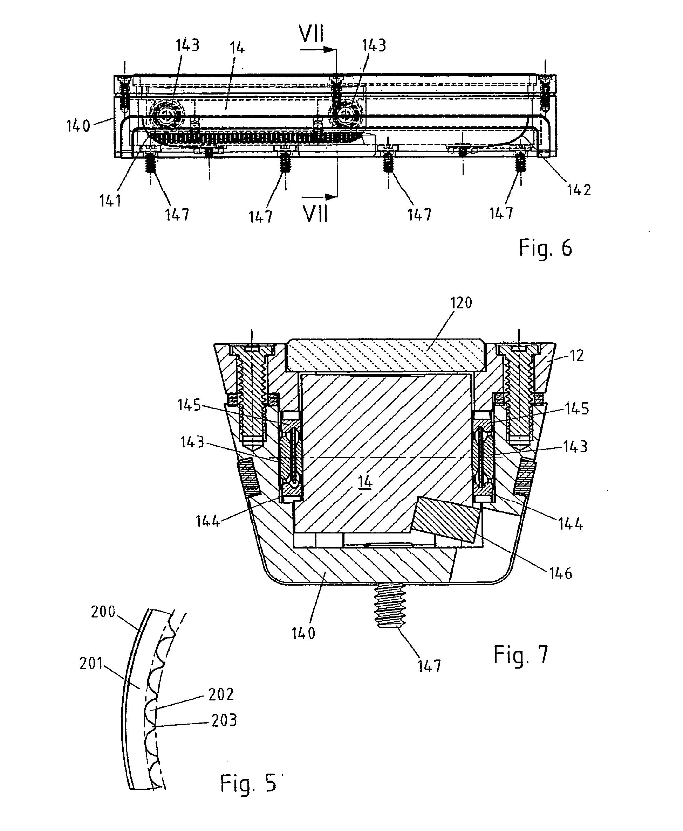

Le mouvement comporte quatre barillets 15, 16, 17 et 18 parallèles aux deux faces inclinées 100 et munis de ressorts pour emmagasiner l'énergie nécessaire à actionner le mouvement. Les axes des barillets ne sont donc pas perpendiculaires à la platine. Les deux extrémités de chaque axe sont tenues par des roulements à bille, les roulements supérieurs 151, 161, 171 et 181 étant visibles sur les figures 2 et 3. Les ressorts de barillets sont rechargés par le déplacement d'une masse oscillante, dans cet exemple une masse oscillante linéaire 14 se déplaçant sous l'effet des mouvements du porteur dans une coulisse 140 sous la glace centrale 120. La face inférieure de la masse oscillante 14 est munie d'une crémaillère 146 (figures 6 et 7) actionnant un pignon 28 à axe horizontal entraînant la poulie de renvoi gauche 29 au travers de l'engrenage 26 ou d'un train d'engrenage.

Les quatre barillets sont munis chacun de deux poulies crantées, seules les poulies 150, 160, 170 et 180 proches du fond étant visibles sur la figure 2. Les deux barillets 15 et 16 sont reliés en série au moyen d'une courroie de remontage gauche 20 engrenant avec les premières poulies 150, 160 et d'une courroie de décharge gauche 24 (figure 3) engrenant avec les deuxièmes poulies non référencées. Un pont supérieur gauche 22 sépare les deux courroies 20 et 24 dans le chemin entre les deux barillets 15, 16. Les courroies 20 et 24 sont tendues au moyen d'un tendeur 31 muni d'une portion excentrique 310 et agissant sur la face dorsale des courroies; en réglant la position angulaire de la portion excentrique 310 au moyen de la vis non référencée, on modifie la longueur du chemin de courroie afin de régler sa tension. La courroie 20 engrène en outre avec la poulie de charge des barillets gauches 29. Les déplacements de la masse oscillante 14 sont donc transmis à la courroie 20 par l'intermédiaire des engrenages 28 et 26 et de la poulie de charge 29 pour recharger les deux barillets 15 et 16.

De la même façon, les deux barillets 17 et 18 sont reliés en série au moyen d'une courroie de remontage droite 21 engrenant avec les premières poulies 170, 180 et d'une courroie de décharge droite 25 engrenant avec les deuxièmes poulies non référencées, un pont supérieur droit 23 séparant les deux courroies. La tension des courroies 21, 25 peut être réglée par le fond en agissant sur la portion excentrique 320 du tendeur 32. Une poulie de charge des barillets droits 30 est entraînée par la courroie 21.

La poulie 29 sur le chemin de la courroie 20 entraîne la poulie 30 sur le chemin de la courroie 21 au moyen de la courroie crantée 41, visible sur la figure 4 illustrant une vue de dessus, au travers de la platine 10 du mouvement. La poulie 41 est tendue par les deux tendeurs 410 et 411 munis de portions excentriques. Les oscillations de la masse 14 sont ainsi également transmises à la deuxième paire de barillets 17, 18.

La courroie 24 reliant les deuxièmes poulies de la première paire de barillets 15, 16 entraîne une poulie de décharge 270 actionnant une courroie de répartiteur gauche 42 dont seule une portion est visible sur la figure 4. La courroie 42 entraîne le plateau supérieur du répartiteur de couple 40 dont le rôle sera décrit plus bas.

De la même façon, la courroie 25 reliant les deuxièmes poulies de la deuxième paire de barillets 17, 18 entraîne une deuxième poulie de décharge 271 actionnant une courroie de répartiteur droite 43, qui entraîne le plateau inférieur du répartiteur de couple 40.

Le répartiteur de couple 40 comporte deux plateaux appuyés l'un contre l'autre par un ressort de maintien des plateaux, non représenté. Un plateau est entraîné par la courroie gauche 42 tandis que l'autre plateau est entraîné par la courroie droite 43. Les deux plateaux sont munis de dentures coopérant mutuellement, en sorte que les couples transmis par les deux paires de barillets 15-16 et 17-18 s'additionnent. La denture des deux plateaux est toutefois agencée de manière à ce qu'une différence de couple entre les deux plateaux tende à les écarter à l'encontre de la force du ressort. Lorsque cette différence de couple devient importante, l'écartement entre les deux plateaux du répartiteur est telle que les deux engrenages "décrochent" et sautent un pas; la différence de couple est donc absorbée par le ressort de maintien des plateaux. Le répartiteur de couple 40 permet ainsi de garantir que les deux paires de barillets 15-16 et 17-18 fournissent un couple approximativement constant, même si les ressorts de barillets n'ont pas des caractéristiques identiques.

Une courroie 44 relie le répartiteur de couple 40 à la poulie des heures (non représentée) sur le canon des aiguilles 45 au centre du mouvement. La poulie des heures actionne directement l'aiguille des heures 92, ainsi que la poulie de minuterie 60 au travers de la courroie de minutes 61. La poulie de minuterie 60 entraîne l'aiguille des minutes 91 au travers d'un engrenage ou d'une courroie supplémentaire non représentée.

Les rotations de la poulie de minuterie 60 sont en outre transmises au travers d'un train d'engrenages et/ou de courroies non représenté à la poulie de petite seconde 48 qui entraînée une courroie de petite seconde 47 tendue par un renvoi 49 à 16h30. Une poulie supplémentaire, ou un engrenage actionné par la courroie 47, permet d'entraîner le canon de petite seconde 52 pour entraîner l'aiguille de petite seconde 93.

Un organe réglant 51 amovible monté sur un pont 511 est fixé par des vis 511 à la platine 10. L'organe réglant peut être entièrement réglé hors du mouvement puis monté après réglage, seul un réglage fin de deuxième niveau au moyen d'une seule vis de la raqueterie étant encore nécessaire pour adapter la marche de la montre à chaque mouvement. L'organe réglant comporte plusieurs éléments et se trouve sur le même plan que d'autres organes (40, par exemple) liés au châssis.

Le réglage est ainsi grandement facilité puisque l'ensemble des points de réglage est accessible aisément lorsque l'organe réglant est démonté. L'organe réglant peut être conventionnel, à carrousel, à tourbillon ou même électronique et comporte dans cet exemple un échappement dont une portion est visible sur la figure 4. Il est relié par un train d'engrenages non représenté, ou par une courroie supplémentaire, à la roue de petite seconde coaxiale au canon de petite seconde 52.

Ainsi la quasi-totalité du train d'engrenage des mouvements de montre traditionnels est remplacé par des courroies et des poulies. En particulier, la chaîne cinématique entre les barillets et le canon des aiguilles est entièrement constituée de courroies. Par ailleurs, les paliers et rubis habituels sont au moins partiellement remplacés par des roulements à bille maintenant les axes de poulies, Les tolérances sur le positionnement des axes lors du montage du mouvement peuvent ainsi être relâchées, puisque les courroies peuvent absorber des erreurs de parallélisme ou d'écartement entre poulies même relativement importantes. Par ailleurs, il est possible de disposer des poulies dans des plans non parallèles entre eux, ce qui donne au constructeur de mouvement une liberté supplémentaire lors de la conception. Par exemple, des courroies peuvent aussi être utilisées pour transporter un index, une aiguille ou n'importe quel type d'indicateur sur le cadran, sur le bord latéral ou sur une surface oblique de la montre, des cornes ou du bracelet. L'utilisation de courroies, de poulies et de cardans permet en outre de faciliter grandement la conception de mouvements comportant plusieurs ponts non parallèles entre eux.

Les poulies 29 et 30 sont parallèles aux barillets et aux faces inclinées 100; leurs axes comportent de préférence un cardan, ou un double cardan non représenté, et permettant de monter des poulies ou des engrenages parallèles à la platine 10. Les axes de ces deux poulies sont donc liés à platine au travers d'un cardan.

La figure 5 illustre à titre d'exemple un tronçon de courroie 20 selon l'invention. Différentes contraintes sont posées aux courroies du mouvement:
■ Longueurs et sections nettement inférieures à celles des courroies connues dans d'autres domaines de la technique.
■ Fonctionnement en continu ou quasi-continu avec un minimum d'usure et d'élongation.
■ Doit pouvoir collaborer avec des poulies et des renvois de diamètres fortement variables.
■ Suffisamment élastiques pour pouvoir être tendues au moyen des tendeurs et, si désiré, pour pouvoir être vrillée entre deux poulies non parallèles.
■ Suffisamment rigides pour ne pas quitter la poulie, même en cas de chocs importants.

Selon l'invention, la courroie est constituée d'un substrat métallique fin 200, qui lui donne la solidité et la rigidité transversale requises, sur lequel est surmoulée une épaisseur de caoutchouc ou de matériau synthétique plus importante et dans laquelle sont formées les dents 203. Afin de garantir un angle de contact avec les dents de la courroie acceptable quel que soit le rayon de courbure de la courroie, les interstices 202 entre deux dents 203 sont de préférence arrondis, par exemple demi-circulaires, paraboliques ou cycloïdes, tandis que les dents 202 de la courroie se résument à une arête fine entre deux interstices. Ainsi, même lorsque la courroie 20 est très refermée, l'interstice 202 entre deux dents 203 reste suffisamment large pour que les dents de la poulie puissent y être introduites. La forme et la taille des dents de différentes poulies collaborant avec une même courroie peuvent aussi être adaptées au rayon de courbure de la courroie autour de la poulie.

Des courroies lisses ou pourvues de dents de formes différentes peuvent aussi être utilisées dans le cadre de l'invention.

Les figures 6 et 7 illustrent à titre d'exemple la masse oscillante 14 utilisée dans le mouvement pour recharger les barillets au travers de la chaîne cinématique 26-28. Selon l'invention, la masse oscillante se déplace linéairement dans une coulisse 140. Des masses oscillantes pivotantes peuvent cependant aussi être utilisées avec des mouvements à poulies selon l'invention; par ailleurs, la masse oscillante décrite peut aussi être utilisée avec des mouvements plus conventionnels à engrenages. La masse oscillante 14, qui est visible par le fond du mouvement au travers de la glace 120, est munie de quatre roues 143 qui lui permettent de coulisser entre des rails inférieurs 144 et supérieurs 145 le long de la coulisse 140. La masse 14 se déplace sous l'action de la gravité et des accélérations en fonction des mouvements du poignet du porteur.

Des ressorts 141 et 142, constitués dans cet exemple par des lames métalliques flexibles recourbées, sont disposées à chaque extrémité du parcours de la masse afin d'absorber les chocs en bout de course, de réduire le bruit et de renvoyer la masse 14 en sens inverse. Des ressorts spiraux ou élastomères peuvent aussi être utilisés. Une crémaillère 146 sur la base de la masse oscillante 14 transmet les mouvements linéaires bidirectionnels de la masse 14 au pignon à axe horizontal 28, qui les convertit en mouvements circulaires transmis au travers d'une chaîne cinématique pour recharger les quatre barillets 15, 16, 17, 18. La coulisse 147 est simplement fixée au moyen de vis 147 au châssis 1.

Bien que la montre décrite comporte quatre barillets non parallèles entre eux et un répartiteur de couple entre ces barillets, l'homme du métier comprendra que des poulies et des courroies peuvent aussi être utilisées avec des montres comportant un seul barillet, ou n'importe quel nombre de barillets.

L'utilisation de courroies dans un mouvement de montre est aussi appropriée lorsqu'un mobile ou un indicateur doit parcourir une trajectoire très longue ou de forme particulière. Dans ce cas, le mobile ou l'indicateur peut être porté directement par la courroie. Par exemple, il serait possible dans le cadre de l'invention d'utiliser une courroie portant des quantièmes pour un afficheur de grande date, ou pour afficher des phases de lune, des déplacements de planètes ou des cycles de marées le long d'une trajectoire bidimensionnelle ou même tridimensionnelle.

## Revendications

1. Mouvement horloger destiné à être intégré dans une boîte de montre-bracelet (9) pour imprimer une rotation circulaire à au moins une aiguille (91, 92, 93) et comprenant au moins une courroie (20, 21, 24, 25, 42, 43, 44, 45, 47, 61) pour transmettre les mouvements et/ou les couples entre au moins deux poulies (60, 150, 160, 170, 180, 29, 30, 270, 271), **caractérisé par**
une poulie de minuterie (60) agencée pour être actionnée au travers d'une courroie de minutes (61), ladite poulie de Minuterie (60) entraînant en rotation circulaire une aiguille des minutes (91) au travers d'un engrenage ou d'une courroie supplémentaire.

2. Mouvement horloger selon la revendication 1, dans lequel au moins une dite courroie est tendue entre une poulie entraînante et au moins une poulie entraînée, ladite poulie entraînante ayant un diamètre différent de ladite poulie entraînée.

3. Mouvement horloger selon la revendication 2, comportant une platine (10), l'axe d'au moins une dite poulie étant perpendiculaire à ladite platine.

4. Mouvement horloger selon l'une des revendications 1 à 3, **caractérisé en ce qu'**il est de type mécanique et comporte au moins un barillet (15, 16, 17, 18), au moins une courroie étant prévue dans la chaîne cinématique entre ledit ou lesdits barillets et lesdites aiguilles.

5. Mouvement horloger selon la revendication 4, dans lequel au moins une dite courroie (42, 43, 44) est utilisée pour transmettre l'énergie emmagasinée par ledit ou lesdits barillets (15, 16, 17, 18) au reste de la montre.

6. Mouvement horloger selon l'une des revendications 4 ou 5, comprenant plusieurs barillets (15, 16, 17, 18).

7. Mouvement horloger selon la revendication 6, au moins deux dits barillets (15-16; 17-18) étant reliés l'un à l'autre au moyen de courroies (20; 21).

8. Mouvement horloger selon l'une des revendications 6 ou 7, au moins deux dits barillets (15, 16, 17, 18) étant reliés l'un à l'autre au travers d'un répartiteur de couple (40).

9. Mouvement horloger selon l'une des revendications 6 à 8, comprenant 4 barillets (15, 16, 17, 18) visibles sur la face Inférieure du mouvement et répartis en deux paires (15-16; 17-18) de deux barillets,
les barillets constituant chaque paire étant reliés l'un à l'autre au travers d'une courroie (20; 21),
les deux paires de barillets étant reliées l'une à l'autre au travers d'un répartiteur de couple (40).

10. Mouvement horloger selon l'une des revendications 1 à 9, dans lequel au moins une dite courroie (20, 21) est au moins partiellement visible sur la face inférieure du mouvement.

11. Mouvement horloger selon l'une des revendications 1 à 10, dans lequel la face inférieure du mouvement est fermée par au moins une glace (110, 130) recouvrant ladite ou lesdites courroies.

12. Mouvement horloger selon l'une des revendications 1 à 11, dans lequel au moins une dite courroie (47) est au moins partiellement visible au travers d'un guichet (95) dans le cadran (94) de la montre.

13. Mouvement horloger selon l'une des revendications 1 à 12, associé à un cadran (94) opaque ou transparent selon la direction depuis laquelle on le regarde.

14. Mouvement horloger selon l'une des revendications 1 à 13, comprenant au moins un tendeur (31, 32, 410, 411) pour tendre au moins une courroie.

15. Mouvement horloger selon la revendication 14, ledit tendeur (31, 32, 410, 411) agissant sur la face dorsale de la courroie correspondante.

16. Mouvement horloger selon l'une des revendications 14 ou 15, ledit tendeur (31, 32, 410, 411) comportant une portion excentrique (310, 320).

17. mouvement horloger selon l'une des revendications 4 à 16, comprenant au moins une poulie (29, 30) non parallèle à la platine (10) du mouvement.

18. Mouvement horloger selon la revendication 17, ledit ou lesdits barillets (15, 16, 17, 18) étant non parallèles à ladite platine (10).

19. Mouvement horloger selon l'une des revendications 17 ou 18, comprenant plusieurs barillets (15, 16, 17, 18) non parallèles entre eux.

20. Mouvement horloger selon l'une des revendications 17 à 19, au moins une dite poulie (29; 30) non parallèle à la platine étant montée sur un axe lié à ladite platine au travers d'un cardan.

21. Mouvement horloger selon l'une des revendications 1 à 20, **caractérisé** à ce qu'au moins une dite poulie (150, 160, 170, 180) est montée sur un axe tenu par et pivotant entre des roulements à billes (151, 161, 171, 181).

22. Mouvement horloger selon l'une des revendications 1 à 21. comprenant au moins un tendeur de courroie (31, 32, 410, 411) permettant de réguler la tension des courroies.

23. Mouvement horloger selon l'une des revendications 1 à 22, au moins une desdites courroies (20, 21) étant crantée.

24. Mouvement horloger selon la revendication 23, ladite au moins une courroie (20, 21) comprenant des interstices (202) entre les dents (203) arrondis et dépourvus d'angles, et des dents qui se réduisant à une arête.

25. Mouvement horloger selon l'une des revendications 1 à 24, au moins une des dites courroies (20) étant fabriquée par surmoulage de matériau synthétique (201) sur un substrat métallique (200).

26. Mouvement horloger selon l'une des revendications 1 à 25, au moins une desdites courroies étant utilisée pour transporter un index sur le cadran de la montre.

27. Mouvement horloger selon l'une des revendications 1 à 26, au moins une desdites courroies étant utilisée pour transporter un index sur le bord latéral de la montre.

28. Mouvement horloger selon l'une des revendications 4 à 27, lesdits barillets (15, 16, 17, 18) étant tendus par les déplacements d'une masse oscillante linéaire (14).

29. Mouvement horloger selon la revendication 28, ladite masse oscillante linéaire (14) étant visible au travers du fond du mouvement.

30. Mouvement horloger selon l'une des revendications 28 ou 29, ladite masse oscillante linéaire (14) comportant des roues (143) pour se déplacer au-dessus d'au moins un rail linéaire (144, 145).

31. Mouvement horloger selon l'une des revendications 28 à 30, ladite masse oscillante linéaire (14) se déplaçant entre deux fins de course, des éléments élastiques (141, 142), étant prévus aux-dites fins de course pour renvoyer ladite masse oscillante linéaire.

32. Mouvement horloger selon la revendication 31, lesdits éléments élastiques (141, 142) étant constitués par des lames ressort.

33. Mouvement horloger selon l'une des revendications 1 à 32, comprenant plusieurs organes (40; 51) montés dans un même plan dont l'un au moins (51) est amovible.

34. Mouvement horloger selon la revendication 33, comprenant un organe réglant (51) amovible.

35. Mouvement horloger selon la revendication 34, dans lequel ledit organe réglant (51) est conçu de manière à pouvoir être réglé hors du mouvement puis monté dans le mouvement.

36. Mouvement horloger selon l'une des revendications 1 à 35, dans lequel au moins une partie de son fond est recouvert d'une glace (110, 120, 130).

37. Mouvement horloger selon l'une des revendications 1 à 36, comprenant un fond et au moins un joint pour étanchéifier ledit fond.

38. Mouvement horloger selon l'une des revendications 1 à 37, comprenant un fond qui n'est pas plat.

39. Mouvement horloger selon l'une des revendications 1 à 38 dans lequel la face supérieure n'est pas parallèle au fond.

40. Montre bracelet (9) comprenant un mouvement selon l'une des revendications 1 à 39.

41. Montre bracelet selon la revendication 40, dans laquelle le fond du mouvement constitue directement le fond de la montre.

42. Procédé de montage d'un mouvement selon l'une des revendications 1 à 39, comprenant les étapes suivantes:
montage du mouvement,
montage séparé d'un organe réglant (51),
réglage de l'organe réglant,
montage de l'organe réglant déjà réglé dans ledit mouvement.

## Claims

1. Clockwork movement designed to be integrated in the case of a wristwatch (9) for giving a circular rotation of at least one hand (91, 92, 93), and comprising at least one belt (20, 21, 24, 25, 42, 43, 44, 45, 47) for transmitting the movements and/or the couples between at least two pulleys (150, 160, 170, 180, 29, 30, 270, 271), **characterized by**
a minute pulley (60) arranged for being driven by means of a minute belt (61), said minute pulley (60) is driving in a circular rotation a minute hand (91) by means of a gear or an additional belt.

2. Clockwork movement according to claim 1, wherein at least one said belt is tightened between a driving pulley and at least one driven pulley, said driving pulley having a diameter different from that of said driven pulley.

3. Clockwork movement according to claim 2, comprising a bottom plate (10), the axis of said at least one pulley being perpendicular to said bottom plate.

4. Clockwork movement according to one of the claims 1 to 3, **characterized in that** it is of mechanical type and comprises at least one barrel (15, 16, 17, 18) and hands (91, 92, 93) to display the time, at least one belt being provided in the kinematic chain between said barrels and said hands.

5. Clockwork movement according to claim 4, wherein at least one said belt (42, 43, 44) is used to transmit the energy stored by said barrel or barrels (15, 16, 17, 18) to the rest of the watch.

6. Clockwork movement according to one of the claims 4 or 5, comprising several barrels (15, 16, 17, 18).

7. Clockwork movement according to claim 6, at least two said barrels (15-16; 17-18) being connected to one another by means of belts (20; 21).

8. Clockwork movement according to one of the claims 6 or 7, at least two said barrels (15, 16, 17, 18) being connected to one another through a couple distributor (40).

9. Clockwork movement according to one of the claims 6 to 8, comprising 4 barrels (15, 16, 17, 18) visible on the lower face of the movement and distributed in two pairs (15-16; 17-18) of two barrels, the barrels constituting each pair being connected to one another through a belt (20; 21),
both pairs of barrels being connected to one another through a couple distributor (40).

10. Clockwork movement according to one of the claims 1 to 9, wherein at least one said belt (20, 21) is at least partially visible on the lower face of the movement.

11. Clockwork movement according to one of the claims 1 to 10, wherein the lower face of the movement is closed by at least one glass (110, 130) covering said belt or belts.

12. Clockwork movement according to one of the claims 1 to 11, wherein at least one said belt (47) is at least partially visible through an aperture (95) in the dial (94) of the watch.

13. Clockwork movement according to one of the claims 1 to 12, associated to a dial (94) that is opaque or transparent according to the direction of viewing.

14. Clockwork movement according to one of the claims 1 to 13, comprising at least one tightener (31, 32, 410, 411) for tightening at least one belt.

15. Clockwork movement according to claim 14, said tightener (31, 32, 410, 411) acting on the dorsal face of the corresponding belt.

16. Clockwork movement according to one of the claims 14 or 15, said tightener (31, 32, 410, 411) comprising an eccentric portion (310, 320).

17. Clockwork movement according to one of the claims 1 to 16, comprising at least one pulley (29, 30) non-parallel to the bottom plate (10) of the movement.

18. Clockwork movement according to claim 17, said barrel or barrels (15, 16, 17, 18) being non-parallel to said bottom plate (10).

19. Clockwork movement according to one of the claims 17 or 18, comprising several barrels (15, 16, 17, 18) that are non-parallel to one another.

20. Clockwork movement according to one of the claims 17 to 19, at least one said pulley (29; 30) non-parallel to the bottom plate being mounted on an axis connected to said bottom plate through a gimbal suspension.

21. Clockwork movement according to one of the claims 1 to 20, **characterized in that** at least one of said pulleys (150, 160, 170, 180) is mounted on an axis held by and pivoting between ball bearings (151, 161, 171, 181).

22. Clockwork movement according to one of the claims 1 to 21, comprising at least a belt tightener (31, 32, 410, 411) allowing the tightness of the belts to be adjusted.

23. Clockwork movement according to one of the claims 1 to 22, at least one said belt (20, 21) being toothed.

24. Clockwork movement according to claim 23, said at least one belt (20, 21) comprising interstices (202) between the teeth (203) that are rounded and devoid of angles, and teeth that are reduced to an edge.

25. Clockwork movement according to one of the claims 1 to 24, at least one of said belts (20) being made by duplicate-moulding a synthetic material (201) onto a metallic substrate (200).

26. Clockwork movement according to one of the claims 1 to 25, at least one said belt being used for transporting an index onto the dial of the watch.

27. Clockwork movement according to one of the claims 1 to 26, at least one said belt being used for transporting an index onto the lateral side of the watch.

28. Clockwork movement according to one of the claims 1 to 27, said barrels (15, 16, 17, 18) being tightened by the displacements of a linear oscillating mass (14).

29. Clockwork movement according to claim 28, said linear oscillating mass (14) being visible through the back cover of the movement.

30. Clockwork movement according to one of the claims 28 or 29, said linear oscillating mass (14) comprising wheels (143) for moving over at least one linear rail (144, 145).

31. Clockwork movement according to one of the claims 28 to 30, said linear oscillating mass (14) moving between two ends of travel, elastic elements (141, 142) being provided at said ends of travel to return said linear oscillating mass.

32. Clockwork movement according to claim 31, said elastic elements (141, 142) being constituted by spring blades.

33. Clockwork movement according to one of the claims 1 to 32, comprising several organs (40; 51) mounted in a same plane of which at least one (51) is removable.

34. Clockwork movement according to claim 33, wherein the regulating organ (51) is removable.

35. Clockwork movement according to claim 34, wherein said regulating organ (51) is conceived so as to be able to be adjusted outside the movement and then mounted into the movement.

36. Clockwork movement according to one of the claims 1 to 35, wherein at least part of the back cover is covered by a glass (110, 120, 130).

37. Clockwork movement according to one of the claims 1 to 36, comprising at least one gasket to make said back cover water-resistant.

38. Clockwork movement according to one of the claims 1 to 37, wherein said back cover is not flat.

39. Clockwork movement according to one of the claims 1 to 38, wherein said upper face is not parallel to the back cover.

40. Wristwatch (9) comprising a movement according to one of the claims 1 to 39.

41. Wristwatch according to claim 40, wherein the back cover of the movement directly constitutes the back cover of the watch.

42. Assembly method of a movement according to one of the claims 1 to 39, comprising the following steps:
mounting the movement,
separately mounting the regulating organ (51),
adjusting the regulating organ,
mounting the already adjusted regulating organ into said movement.

## Patentansprüche

1. Uhrwerk ausgelegt, um in das Gehäuse einer Armbanduhr (9) integriert zu werden, um mindestens einem Zeiger (91, 92, 93) eine kreisförmige Rotation zu geben, und umfassend mindestens ein Band (20, 21, 24, 25, 42, 43, 44, 45, 47), um die Bewegungen und/oder Kupplungen zwischen mindestens zwei Rollen (150, 160, 170, 180, 29, 30, 270, 271) zu übertragen, **gekennzeichnet, durch**
eine Minutenrolle (60) angeordnet, um **durch** ein Minutenband (61) angetrieben zu werden, wobei besagtes Minutenband (60) einen Minutenzeiger (91) **durch** ein Getriebe oder ein zusätzliches Band antreibt.

2. Uhrwerk gemäss Anspruch 1, wobei mindestens ein besagtes Band straff zwischen einer antreibenden Rolle und mindestens einer angetriebenen Rolle gespannt ist, wobei besagte antreibende Rolle einen anderen Durchmesser als besagte angetriebene Rolle hat.

3. Uhrwerk gemäss Anspruch 2, umfassend eine Bodenplatte (10), wobei die Achse von besagter einen Rolle senkrecht zu besagter Bodenplatte ist.

4. Uhrwerk gemäss einem der Ansprüche 1 bis 3,
**gekennzeichnet dadurch dass** es mechanischer Art ist, und mindestens eine Trommel (15, 16, 17, 18) und Zeiger (91, 92, 93) umfasst, um die Zeit anzuzeigen, wobei mindestens ein Band in der kinematischen Kette zwischen besagter Trommel und besagten Zeigern bereitgestellt wird.

5. Uhrwerk gemäss Anspruch 4, wobei mindestens ein besages Band (42, 43, 44) verwendet wird, um die Energie die durch die Trommel oder Trommeln (15, 16, 17, 18) gespeichert wird, zu dem Rest der Uhr zu übertragen.

6. Uhrwerk gemäss Anspruch 4 oder 5, das mehrere Trommeln (15, 16, 17, 18) umfasst.

7. Uhrwerk gemäss Anspruch 6, das mindestens zwei Trommeln (15-16, 17-18) umfasst, die miteinander durch Bänder verbunden sind (20, 21).

8. Uhrwerk gemäss Anspruch 6 oder 7, wobei mindestens zwei Trommeln (15, 16, 17, 18) durch einen Kupplungsverteiler (40) miteinander verbunden sind.

9. Uhrwerk gemäss einem der Ansprüche 6 bis 8, das vier Trommeln (15, 16, 17, 18) umfasst, die durch die Unterseite des Uhrwerks sichtbar sind, und in zwei Paare (15-16, 17-18) verteilt sind, die Trommeln, die ein Paar darstellen, sind miteinander durch ein Band (20, 21) verbunden,
beide Paare von Trommeln sind miteinander durch einen Kupplungsverteiler (40) verbunden.

10. Uhrwerk gemäss einem der Ansprüche 1 bis 9, wobei mindestens ein besagtes Band (20, 21) mindestens teilweise durch die Unterseite des Uhrwerks sichtbar ist.

11. Uhrwerk gemäss einem der Ansprüche 1 bis 10, wobei die Unterseite des Uhrwerks durch mindestens ein Glass (110, 130) geschlossen ist, das besagtes Band oder Bänder abdeckt.

12. Uhrwerk gemäss einem der Ansprüche 1 bis 11, wobei mindestens ein Band (47) mindestens teilweise durch eine Öffnung (95) in dem Zifferblatt der Uhr sichtbar ist.

13. Uhrwerk gemäss einem der Ansprüche 1 bis 12, das zu einem Zifferblatt (94) zugeordnet ist, das undurchsichtig oder durchsichtig ist, gemäss der Blickrichtung.

14. Uhrwerk gemäss einem der Ansprüche 1 bis 13, umfassend mindestens ein Straffelement (31, 32, 410, 411), um mindestens ein Band zu straffen.

15. Uhrwerk gemäss Anspruch 14, wobei besagtes Straffelement (31, 32, 410, 411) auf die Rückseite des korrespondierenden Bandes wirkt.

16. Uhrwerk gemäss einem der Ansprüche 14 bis 15, wobei besagtes Straffelement (31, 32, 410, 411) ein exzentrisches Teil umfasst.

17. Uhrwerk gemäss einem der Ansprüche 1 bis 16, umfassend mindestens eine Rolle (29, 30), die nicht parallel zu der Bodenplatte (10) des Uhrwerks ist.

18. Uhrwerk gemäss Anspruch 17, wobei besagte Trommel oder Trommeln (15, 16, 17, 18) nicht parallel zu besagter Bodenplatte (10) ist.

19. Uhrwerk gemäss Anspruch 17 oder 18, umfassend mehrere Trommeln (15, 16, 17, 18), welche nicht parallel zueinander sind.

20. Uhrwerk gemäss einem der Ansprüche 17 bis 19, mindestens ein der besagten Rollen (29, 30) ist nicht parallel zu der Bodenplatte, die auf einer Achse befestigt ist, verbunden zu besagten Bodenplatte durch einen kardanische Aufhängung.

21. Uhrwerk gemäss einem der Ansprüche 1 bis 20, **gekennzeichnet, dadurch dass** mindesten eine der besagten Räder (150, 160, 170, 180) auf einer Achse befestigt ist, die durch die Kugellager (151, 161, 171, 181) gehalten wird und zwischen diesen schwingt.

22. Uhrwerk gemäss einem der Ansprüche 1 bis 21, wobei umfassend mindestens einen Bandspanner (31, 32, 410, 411), welches es erlaubt, die Straffheit des Bands anzupassen.

23. Uhrwerk gemäss einem der Ansprüche 1 bis 22, wobei mindestens ein besagtes Band Zähne aufweist.

24. Uhrwerk gemäss Anspruch 23, besagtes mindestens eine Band (20, 21) Lücken (202) zwischen den Zähnen (203) umfasst, welche abgerundet und frei von Winkels sind, und Zähne, welche reduziert zu einer Kante sind.

25. Uhrwerk gemäss einem der Ansprüche 1 bis 24, wobei mindestens ein besagtes Band (20) hergestellt wird, indem ein synthetisches Material (201) doppelt auf ein metallisches Substrat (200) gegossen wird.

26. Uhrwerk gemäss einem der Ansprüche 1 bis 25, wobei mindestens ein besagtes Band verwendet wird, um einen Zeiger auf dem Zifferblatt der Uhr zu transportieren.

27. Uhrwerk gemäss einem der Ansprüche 1 bis 26, wobei mindestens ein besagtes Band verwendet wird, um einen Index auf die Rückseite der Uhr zu transportieren.

28. Uhrwerk gemäss einem der Ansprüche 1 bis 27, wobei besagte Rolle (15, 16, 17, 18) durch die Verlagerung einer linearen oszillierenden Masse (14) gestrafft.

29. Uhrwerk gemäss Anspruch 28, wobei besagte lineare oszillierende Masse (14) durch den Rückendeckel des Uhrwerks sichtbar ist.

30. Uhrwerk gemäss einem der Ansprüche 28 oder 29, besagte linear oszillierende Masse (14) umfasst Räder (143), um sich mindestens über eine lineare Schiene (144, 145) zu bewegen.

31. Uhrwerk gemäss einem der Ansprüche 28 bis 30, wobei sich besagte linear oszillierende Masse (14) zwischen zwei Ende einer Bahn bewegt, wobei elastische Elemente (141, 142) an besagten Enden der Bahn angeordnet sind, um besagtes lineare oszillierende Masse zurückzuführen.

32. Uhrwerk gemäss Anspruch 31, besagtes elastisches Element (141, 142) aus Federblättern besteht.

33. Uhrwerk gemäss einem der Ansprüche 1 bis 32, umfassend mehrere Organe (40; 51), die in derselben Ebene befestigt sind, wobei mindestens eines (51) entfernbar ist.

34. Uhrwerk gemäss Anspruch 33, wobei das Regelorgan (51) entfernbar ist.

35. Uhrwerk gemäss Anspruch 34, wobei besagtes Regelorgan (51) derart ist, um ausserhalb des Uhrwerks angepasst zu werden und dann in das Uhrwerk befestigt zu werden.

36. Uhrwerk gemäss einem der Ansprüche 1 bis 35, wobei mindestens ein Teil des Rückendeckels durch ein Glas (110, 120, 130) abgedeckt ist.

37. Uhrwerk gemäss einem der Ansprüche 1 bis 36, umfassend mindestens eine Dichtung, um besagten Rückendeckel wasserabweisend zu machen.

38. Uhrwerk gemäss einem der Ansprüche 1 bis 37, wobei besagter Rückendeckel nicht flach ist.

39. Uhrwerk gemäss einem der Ansprüche 1 bis 38, wobei besagte Fläche nicht parallel zu dem Rückdeckel.

40. Armbanduhr (9) umfassend ein Uhrwerk gemäss einem der Ansprüche 1 bis 39.

41. Armbanduhr gemäss Anspruch 40, wobei der Rückendeckel des Uhrwerks direkt den Rückendeckel der Armbanduhr darstellt.

42. Verfahren zum Zusammenbau eines Uhrwerks gemäss einem der Ansprüche 1 bis 39 umfassend folgende Schritte:
Montieren des Uhrwerks,
separates Befestigen des Regelorgans (51),
Montieren des Regelorgans,
Montieren des bereits angepassten Regelorgans in besagtes Uhrwerk.
